**Europäisches Patentamt**

**European Patent Office**

**Office européen des brevets**

(19)

(11) Publication number : **0 485 801 B1**

# (12) EUROPEAN PATENT SPECIFICATION

(45) Date of publication of patent specification :
**19.01.94 Bulletin 94/03**

(51) Int. Cl.⁵ : **F28F 13/04, F28F 19/00**

(21) Application number : **91118436.4**

(22) Date of filing : **29.10.91**

(54) Heat exchanger.

(30) Priority : **13.11.90 JP 307471/91**
**11.06.91 JP 138783/91**
**11.06.91 JP 138784/91**

(43) Date of publication of application :
**20.05.92 Bulletin 92/21**

(45) Publication of the grant of the patent :
**19.01.94 Bulletin 94/03**

(84) Designated Contracting States :
**DE FR GB IT**

(56) References cited :
**US-A- 4 503 907**
**PATENT ABSTRACTS OF JAPAN vol. 7, no.**
**197 (M-239)(1342) 27 August 1983 & JP-A-58**
**096 996 ( MATSUSHITA DENDI SANGYO KK ) 9**
**June 1983**
**PATENT ABSTRACTS OF JAPAN vol. 7, no.**
**254 (M-255)(1399) 11 November 1983 & JP-A-58**
**136 995 ( MITSUBISHI DENKI KK ) 15 August**
**1983**
**PATENT ABSTRACTS OF JAPAN vol. 14, no.**
**351 (M-100) 30 July 1990 & JP-A-2 122 199 (**
**MATSUSHITA ELECTRIC IND CO LTD ) 9 May**
**1990**

(56) References cited :
**PATENT ABSTRACTS OF JAPAN vol. 4, no. 23**
**(M-93) 26 February 1980 & JP-A-54 159 759 (**
**MITSUBISHI ELECTRIC CORP ) 17 December**
**1979**
**PATENT ABSTRACTS OF JAPAN vol. 15, no.**
**353 (C-86) 6 September 1991 & JP-A-3 139 571 (**
**MATSUSHITA REFRIG CO LTD ) 13 June 1991**
**PATENT ABSTRACTS OF JAPAN vol. 15, no.**
**186 (M-111) 14 May 1991 & JP-A-3 045 893 (**
**MATSUSHITA REFRIG CO LTD ) 27 February**
**1991**

(73) Proprietor : **MATSUSHITA REFRIGERATION**
**COMPANY**
**22, Takaidahondori 3-chome**
**Higashiosaka-shi, Osaka-fu 577 (JP)**

(72) Inventor : **Tsuda, Yoshiyuki**
**24-1-306, Kamishinden-4-chome**
**Toyonaka-shi (JP)**
Inventor : **Iwamoto, Akiko**
**10-11, Noe-3-chome**
**Joto-ku, Osaka-shi (JP)**

(74) Representative : **Patentanwälte Leinweber &**
**Zimmermann**
**Rosental 7/II Aufg.**
**D-80331 München (DE)**

EP 0 485 801 B1

## Description

The present invention relates to a heat exchanger used for a cooling system such as an air conditioner, freezing/refrigerating apparatus and the like.

Recently, a ratio of heat pump type air conditioners using air as a heat source (hereinafter, referred to as a heat pump) to the air conditioners greatly increases and more than half of the room air conditioners used in homes and offices employ the heat pump. Further, most of the heat exchangers used in these heat pumps are a fin tube type heat exchanger composed of aluminum fins and coolant tubes perpendicular to the fin tubes. In the heat pump, water condenses on the surface of the fins of the heat exchanger disposed inside a room when air is cooled, and thus an amount of air passing through the heat exchanger is reduced by the bridge phenomenon caused by water condensed between the fins, which results in the reduction of a cooling capacity. Conversely, when air is heated, the same phenomenon as that of the above heat exchanger disposed inside the room arises in a heat exchanger disposed outside the room.

When the heat exchanger is frosted, a resistance against ventilated air is increased and causes the reduction of a heating capacity. When the heat exchanger is further frosted, the fins are clogged due to the frost, which requires to interrupt a heating operation and to carry out defrosting, and thus the comfortableness of heating is injured. Consequently, to prevent the cooling and heating capacities from being reduced and the heat exchanger disposed outside the room from being frosted when air is heated and to reduce the number of defrosting operations to thereby improve comfortableness, the water condensed on the surface of the fins of heat exchangers of inside- and outside-room units must be removed at all times.

A method of removing the condensed water is to apply a water-repellent treatment to the surface of the fins to thereby cause the condensed water to fall down, and, for example, a method of coating ethylene tetrafluoride resin, ethylene chlorotrifluoride resin and the like is known, as proposed by Japanese Utility Model Application Kokai (Laid-Open) No. Sho 51 (1976)-15261.

Since a heat exchanger to which this coating is applied has a contact angle of the surface of a fin with a water drop of about 110°, condensed water having a relatively large diameter of 2 mm or more can be caused to fall down from the surface of the fin.

The fin spacing of a today's heat exchanger, however, tends to be narrowed to increase the total surface area of the fins for the purpose of increasing the capacity of the heat exchanger. The today's heat exchanger generally has a fin spacing of about 2 to 3 mm and this spacing is expected to be further reduced hereinafter. When the fin spacing is reduced, a fine waterdrop having a diameter of about 1 mm cannot be dropped from the surface of the fins by the method of coating the above resin excellent in water repellency.

Accordingly, waterdrops remaining on the surface of the fins stay therebetween and act as a resistance against ventilated air or frozen to become frosts as it is, and thus the water-repellent effect of the method is not sufficient.

US-A-4,503,907 describes a heat exchanger, comprising a plurality of plate-shaped fins disposed in parallel with a predetermined spacing and allowing air to flow therebetween; and heat transfer tubes going across said plate-shaped fins at right angles, wherein a composition composed of a solution containing a silicone resin compound and inorganic finely divided particles is coated to said plate-shaped fins. Said composition comprises 100 parts by weight of said resin compound, 5 to 95 parts by weight of a surface active agent and 5 to 65 parts by weight of synthetic silica. It is baked at a temperature of 120°C to 200°C for 10 to 40 minutes to give a coating film of 3 to 20 μm.

The object underlying the invention is to provide a heat exchanger having a sufficient water-repellent effect, so that water drops remaining on the surface of the fins do not stay therebetween and, consequently, do not act as a resistance against the ventilated air or do not freeze, respectively.

According to the invention, the above object is achieved by a heat exchanger according to claim 1 or 2. Preferred embodiments are claimed in the dependent claims.

According to the invention the composition is strongly adhered to the plate-shaped fin. Furthermore, fine irregular portions are defined on the surface of the coated film formed on the surface of the plate-shaped fin to reduce the area where a water drop comes into contact with the surface.

## BRIEF DESCRIPTION OF THE DRAWINGS

Figure 1 is a partial cross sectional view of a fin tube type heat exchanger;

Figure 2 is a cross sectional view showing a contact angle of a fin with a waterdrop;

Figure 3 is a schematic diagram of a waterdrop on a surface having a contact angle with a waterdrop of 90° or more and irregular portions defined thereon; and

Figure 4 is a schematic diagram of a waterdrop on a surface having a contact angle with a waterdrop below 90° and irregular portions defined thereon.

DESCRIPTION OF PREFERRED EMBODIMENT

An embodiment of the present invention will be described below with reference to the drawings.

It should be understood that we intend to cover by the appended claims all modifications following the true spirit and scope of our invention.

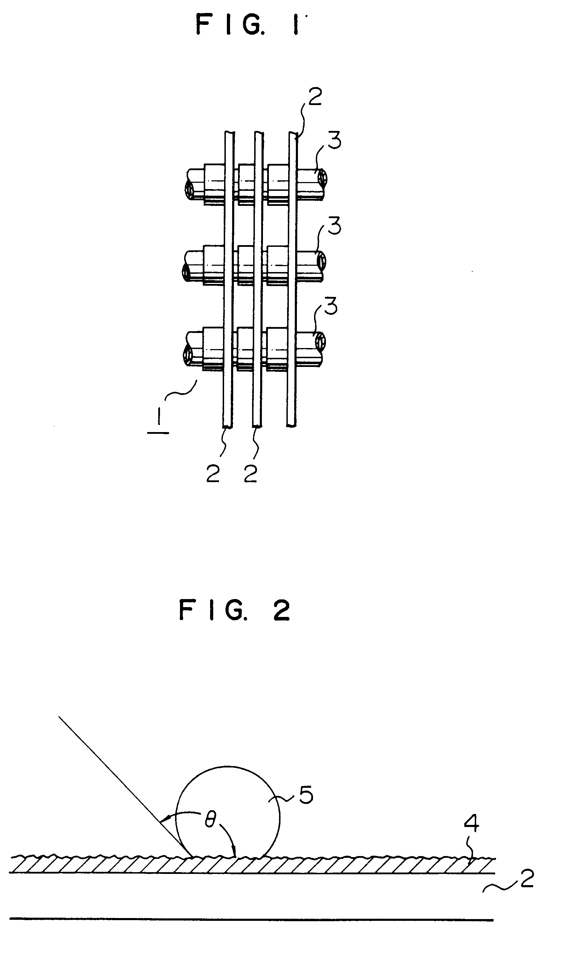

Figure 1 shows a typical fin tube type heat exchanger wherein 1 designates the heat exchanger comprising a multiplicity of plate-shaped fins 2 each composed of an aluminium plate and disposed with a spacing left therebetween and coolant tubes 3 perpendicular to the fins 2.

Examples 1 to 10 and Comparative Examples 3 to 10 shown in Table 1 were obtained in such a manner that a coating composition was dip coated to a plate-shaped fin 2 composed of an aluminium plate having a thickness of 0.5 mm and dried and hardened for 60 minutes in a hot air drying furnace at 100°C after the coating composition had been prepared by adding various kinds of inorganic or organic finely divided particles to a silicone resin coating agent in a predetermined amount to the solids content in the coating agent. Further, Comparative Example 1 was obtained in such a manner that the silicone type resin coating agent was dip coated to a plate-shaped fin 2 and dried and hardened for 30 minutes in the hot air drying furnace at 100°C in the same way. Comparative Example 2 was obtained by being coated with ethylene tetrafluoride resin. The coated film was evaluated based on the surface state, intimate adhering property and water repellent effect of the coated film. The intimate adhering property was evaluated by a cross-cut adhesion test according to JIS K-5400 and the water repellency was evaluated by measuring a contact angle with water. Note, as shown in Figure 2, the contact angle with water is represented by the angle θ between a waterdrop 5 formed on the coated film 4 on the surface of the plate-shaped fin 2 and the surface of the coated film 4, and it can be said that the greater the contact angle θ, the greater the water repellency.

Table 1

| Specimen No. | | Base Resin | Additive Finely Divided Particles | | Additive Amount (wt%) | Particle Diameter | Area/weight Ratio (m²/g) | Water Repellency — Contact Angle with Waterdrop |
|---|---|---|---|---|---|---|---|---|
| Examples | 1 | Silicone resin | Inorganic Silica | | 10 | 1.8 μm | 300 | 155 |
| | 2 | | | | 40 | | | 160 |
| | 3 | | | | 10 | 400 Å | 170 | 150 |
| | 4 | | | | 40 | | | 160 |
| | 5 | | | | 10 | 170 Å | 70 | 155 |
| | 6 | | | | 40 | | | 160 |
| | 7 | | | | 10 | 4 μm | 50 | 150 |
| | 8 | | | | 40 | | | 155 |
| Comparative Examples | 1 | | | | 5 | 1.8 μm | 300 | 135 |
| | 2 | | | | 5 | 400 Å | 170 | 135 |
| | 3 | | Organic Type | Poly-(methyl-methacry-late) | 10 | 4 μm | 50 | 100 |
| | 4 | | | | 40 | | | 120 |
| | 5 | | | | 10 | 4 μm | 1 | 100 |
| | 6 | | | | 40 | | | 110 |
| | 7 | | | Silicone | 10 | 2 μm | 15 | 110 |
| | 8 | | | | 40 | | | 115 |
| | 9 | | — | | — | — | — | 95 |
| | 10 | Ethylene Tetra-Fluoride Resin | — | | — | — | — | 105 |

As apparent from Table 1, Examples 1 to 3 have a very large contact angle with water as compared with that of Comparative Examples 1 to 2 coated with only silicone type resin and ethylene tetrafluoride resin, respectively and that of Comparative Examples 5 to 10. More specifically, these Examples are shown to have the greatly improved contact angle and this is caused by the fine irregular portions formed on the surface of a coated film by adding finely divided particles to water repellent resin, in addition to the water repellent property of the water repellent resin itself. Therefore, it is considered that the area of the surface with which a waterdrop comes into contact is reduced and thus the adhering force of the waterdrop on the surface is greatly reduced and the water repellency is increased thereby (this is referred to as a morphological effect). To reduce the area of the surface with which a waterdrop comes into contact, it is considered effective to reduce the average particle diameter of the finely divided particles and to provide the irregular portions on the surface of the finely divided particles with an acute angle, i.e., to increase the area/weight ratio of the finely divided particles. As shown in the Examples, the finely divided particle must have an average particle diameter of 4 microns or less and an area/weight ratio of 50 $m^2/g$.

Further, it is considered that the difference between the effects obtained by the inorganic finely divided particles and organic finely divided particles is caused by that a more acute angle is provided with the irregular portions on the surface of the inorganic finely divided particles having more indefinite factors. As shown in Comparative Examples 3 and 4, the finely divided particles must be added in an amount of 5% or more to the solids content in a solution as a base, because when the amount is less than 5%, a sufficient water repellent effect cannot be obtained. When the amount is 50% or more, however, a problem arises in cracks developed in a coated film, an intimate adhering property, separation of finely divided particles and the like. Note that when the surface of the inorganic finely divided particles is hydrophilic, a more uniform coated film can be formed by subjecting the finely divided particles to a hydrophobic treatment from the view point of dispersibility because the particles are liable to aggregate together and difficult to form a uniform and good film.

From the above mentioned, it is confirmed that when inorganic finely divided particles having an area/weight ratio of 50 $m^2/g$ or more and an average particle diameter of 4 microns or less are compounded into a solution so that the ratio of the particles to the solids in the solution is 10 to 40 wt%, the maximum morphological effect will be able to be exhibited.

Consequently, when the composition is coated to the plate-shaped fins 2 of the heat exchanger 1, waterdrops adhered to the plate-shaped fin 2 fall down and are thus difficult to remain on the surface of the plate-shaped fins 2, so that the occurrence of the clogging between the plate-shaped fins 2 caused by the frosting of the heat exchanger of a heat pump type air conditioner is delayed. As a result, the reduction of the cooling capacity and heating capacity of the heat pump is prevented and intervals at which the heat exchanger of an outside-room unit is to be defrosted is prolonged, whereby comfortableness can be increased.

Next, other examples will be described.

As shown in Table 2, Examples 11 to 16 and Comparative Examples 11 to 19 were obtained in such a manner that a coating composition was dip coated to a plate-shaped fin 2 composed of an aluminium plate having a thickness of 0.5 mm and dried and hardened for 60 minutes in a hot air drying furnace at 100°C after the coating composition had been prepared by adding silicon dioxide powder each particle of which having a predetermined diameter to a silicone type resin coating agent (SR2411) in a predetermined amount to the coating agent and then stirring and dispersing the thus obtained coating agent at the normal temperature. Comparative Example 11 was obtained in such a manner that only the silicone resin coating agent was dip coated to a plate-shaped fin 2 having a thickness of 0.5 mm and then dried and hardened for 60 minutes in the hot air drying furnace at 100°C in the same way. Note that Comparative Examples 12 to 19 used a plate-shaped fin 2 the surface of which is not subjected to a chemical film treatment and Examples 11 to 16 used a plate-shaped fin 2 which was previously subjected to a boehmite treatment, phosphoric acid alcohol treatment or chromic salt film treatment.

A water repellent effect was evaluated by measuring a contact angle with water. Note, as shown in Figure 2, the contact angle with water is represented by the angle $\theta$ between a waterdrop 5 formed on the coated film 4 on the surface of the plate-shaped fin 2 and the surface of the coated film 4, and it can be said that the greater the contact angle $\theta$, the greater the water repellency. The intimate adhering property of the coated film was evaluated by a pencil hardness test according to JIS-K5400.

Table 2

| | | Base Resin | Coating Material | | | | Water Repellency (Contact Angle with Waterdrop) | Intimate Contact Property |
|---|---|---|---|---|---|---|---|---|
| | | | Additive Powder | | | Chemical Film Treatment | | |
| | | | Type | Particle Diameter | Additive Amount | | | |
| Examples | 11 | Silicone Resin | Silicon Dioxide | 40 nm | 30 wt% | Boehmite Treatment | 160° | ◎ |
| | 12 | | | 1.8 μm | " | | 155° | ◎ |
| | 13 | | | 40 nm | " | Phosphoric Acid Alcohol Treatment | 160° | ◎ |
| | 14 | | | 1.8 μm | " | | 155° | ◎ |
| | 15 | | | 40 nm | " | Chromic Salt Film Treatment | 160° | ◎ |
| | 16 | | | 1.8 μm | " | | 155° | ◎ |
| Comparative Examples | 11 | | — | — | — | — | 100° | ◎ |
| | 12 | | Silicon Dioxide | 40 nm | 2 wt% | — | 120° | ◎ |
| | 13 | | | " | 5 wt% | — | 145° | ○ |
| | 14 | | | " | 30 wt% | — | 160° | ○ |
| | 15 | | | " | 60 wt% | — | 160° | ○ |
| | 16 | | | " | 70 wt% | — | 160° | × |
| | 17 | | | 8 μm | 80 wt% | — | 120° | ○ |
| | 18 | | | 4 μm | " | — | 150° | ○ |
| | 19 | | | 1.8 μm | " | — | 155° | ○ |

Intimate Contact Property: 
◎ ... Pencil Hardness H or Higher 
○ ... " " F – HB 
△ ... " " B – 2B 
× ... " " 3B or lower or Occurrence of Cracks

As apparent from Table 2, Examples 11 to 16 and Comparative Examples 13 to 16, 18 and 19 have the very large contact angle with water as compared with that of Comparative Examples 11 and 12 coated with only the silicone resin coating agent or added with 2 wt% of the silicon dioxide powder or that of Comparative Example 17 added with the silicon dioxide having a particle diameter of 8 microns. More specifically, it is shown that the water repellency is greatly improved by the addition of 5 wt% of the silicon dioxide powder having a particle diameter of 4 microns or less. This is considered to be caused by that when the fine powder is added to the water repellent resin, the area of the resin with which a waterdrop comes into contact is reduced by the fine irregular portions formed on the surface of the resin by the fine powder and thus the adhering force of the waterdrop to the surface of the resin is greatly reduced to thereby increase the water repellency, in addition to that the surface of the fin is made water repellent by the water repellent resin. When 70% or more of the silicon dioxide powder is added to the silicone resin coating agent, however, a coated film becomes brittle and thus a good coated film cannot be obtained due to the occurrence of cracks, although the water repellency of the coating agent is improved. Further, it is considered that when particles having a particle diameter exceeding 4 microns are added in an amount below 5 wt%, fine irregular portions cannot be effectively formed and thus the effect to improve the water repellency is lowered.

Note that although the present Examples use inorganic silica as the powder to be added, it is considered that any powder will exhibit the same effect as long as fine irregular portions are formed thereby on the surface of a coated film.

On the other hand, as apparent from Comparative Examples 11 to 16, the intimate adhering property of the coated film tends to deteriorate as the amount of the silicon dioxide powder to be added is increased. This is considered to be caused by that reactive radical such as silanol radical and the like which is contained in the silicone resin and contributes to the intimate adhering property of the silicone resin to the surface of the plate-shaped fin 2 is partially consumed to be bonded to the added inorganic silica and loses a bonding chance on the surface of the plate-shaped fin, whereas when the plate-shaped fin 2 is previously subjected to the chemical film treatment such as the boehmite treatment, phosphoric acid alcohol treatment or chromic salt film treatment as in Comparative Examples 11 to 16, the intimate adhering property of the silicone type coating agent is improved in the same degree as that of the silicone type coating agent not added with the silicon dioxide powder, and this is considered to be caused by that the chemical film treatment makes the surface of the plate-shaped fin more active so that the reduction of the bonding chance on the surface of the plate-shaped fin is compensated.

Consequently, the surface of the plate-shaped fin exhibits a very excellent water repellency, and thus the fin has an effective capability to cause waterdrops condensed thereon to fall down therefrom even if the fin has a narrow spacing of about 2 mm. As a result, the occurrence of the clogging between the plate-shaped fins caused by the frosting of the heat exchanger of a heat pump type air conditioner is delayed and thus the reduction of the cooling capacity and heating capacity of the heat pump is prevented and intervals at which the heat exchanger of an outside-room unit is to be defrosted is prolonged, whereby comfortableness can be increased.

Further examples will be described.

Examples 21 to 26 shown in Table 3 were obtained in such a manner that a coating composition was dip coated to a plate-shaped fin 2 composed of an aluminium plate having a thickness of 0.5 mm and dried and hardened for 60 minutes in a hot air drying furnace at 100°C after the coating composition had been prepared by adding inorganic finely divided particles having a predetermined particle size to a silicone type resin coating agent in an amount of 30 wt% to the solids content in the coating agent and also adding 10 wt% of various kinds of resin modifiers as an effective component and then stirring and dispersing the thus obtained coating agent at the normal temperature. Further, Comparative Examples 22 to 29 were obtained in such a manner that a coating composition was dip coated to a plate-shaped fin 2 composed of an aluminium plate having a thickness of 0.5 mm and dried and hardened for 60 minutes in the hot air drying furnace at 100°C in the same way as Examples 23 to 25 after the coating composition had been prepared by adding inorganic finely divided particles having a predetermined diameter to a silicone type resin coating agent in a predetermined amount to the solids content in the coating agent and then stirring and dispersing the thus obtained coating agent at the normal temperature. Comparative Example 21 was obtained by dip coating only the silicone resin coating agent to an aluminium plate having a thickness of 0.5 mm and then drying and hardening the agent for 30 minutes in the hot air drying furnace at 100°C in the same way.

The coated film was evaluated based on the intimate adhering property and water repellent effect thereof. The intimate adhering property was evaluated by a pencil hardness test according to JIS-K5400 and the water repellency was evaluated by measuring a contact angle with water. Note, as shown in Figure 2, the contact angle with water is represented by the angle $\theta$ between a waterdrop 5 formed on the coated film 4 on the surface of the plate-shaped fin 2 and the surface of the coated film 4, and it can be said that the greater the contact angle $\theta$, the greater the water repellency.

## Table 3

| | | Coating Material | | | | | Water Repellency (Contact Angle with Waterdrop) | Intimate Contact Property |
|---|---|---|---|---|---|---|---|---|
| | | Base Resin | Additive Powder | | | Resin Modifier | | |
| | | | Type | Particle Diameter | Additive Amount | | | |
| Examples | 21 | Silicone Resin | Silicon Dioxide | 40 nm | 30 wt% | γ-aminopropyl-trimethoxysilane | 160° | ◎ |
| | 22 | | | 1.8 µm | " | | 155° | ◎ |
| | 23 | | | 40 nm | " | γ-(2-aminoethyl)-aminopropylmethyl-dimethoxysilane | 160° | ◎ |
| | 24 | | | 1.8 µm | " | | 155° | ◎ |
| | 25 | | | 40 nm | " | γ-glycidoxy-propyltrimethoxy-silane | 160° | ◎~○ |
| | 26 | | | 1.8 µm | " | | 155° | ◎~○ |
| Comparative Examples | 21 | | – | – | – | – | 100° | ◎ |
| | 22 | | Silicon Dioxide | 40 nm | 2 wt% | – | 120° | ◎ |
| | 23 | | | " | 5 wt% | – | 145° | ○ |
| | 24 | | | " | 30 wt% | – | 160° | ○ |
| | 25 | | | " | 60 wt% | – | 160° | ○ |
| | 26 | | | " | 70 wt% | – | 160° | × |
| | 27 | | | 8 µm | 80 wt% | – | 120° | ○ |
| | 28 | | | 4 µm | " | – | 150° | ○ |
| | 29 | | | 1.8 µm | " | – | 155° | ○ |

Intimate Contact Property: ◎ ... Pencil Hardness H or Higher
○ ... " F – HB
△ ... " B – 2B
× ... " 3B or lower or Occurrence of Cracks

As apparent from Table 3, Examples 21 to 26 and Comparative Examples 23 exhibit the very large contact angle with water as compared with that of Comparative Examples 21 and 22 coated with only silicone resin or added with 2 wt% of silicon dioxide powder or that of Comparative Example 27 added with silicon dioxide powder having a particle diameter of 8 microns. More specifically, it is shown that the water repellency is greatly improved by the addition of 5 wt% of the silicon dioxide powder having a particle diameter of 4 microns or less. This is considered to be caused by that when the fine particles are added to the water repellent resin, fine irregular portions are formed on the surface of the water repellent resin in addition to that water repellency is provided on the surface of the resin by the property of the water repellent resin itself. Therefore, it is considered that the area of the resin with which a waterdrop comes into contact is reduced and thus the adhering force of the waterdrop on the surface of the resin is greatly reduced to thereby increase the water repellency (morphological effect).

When 70% or more of the silicon dioxide powder is added to the silicone coating agent, however, a coated film becomes brittle and thus a good coated film cannot be obtained due to the occurrence of cracks, although the water repellency of the coating agent is improved. Further, it is considered that when the particles having a diameter exceeding 4 microns are added in an amount below 5 wt%, fine irregular portions cannot be formed and thus the effect to improve the water repellency is lowered.

Note that although the present Examples use inorganic silica as the powder to be added, it is considered that any powder will exhibit the same effect as long as fine irregular portions are formed thereby on the surface of a coated film.

On the other hand, as shown in Comparative Examples 21 to 26, the intimate adhering property of the coated film tends to deteriorate as the amount of silicon dioxide powder to be added is increased. This is considered to be caused by that reactive radical such as silanol radical and the like which is contained in silicone resin and contributes to the intimate adhering property of the silicone resin to the surface of a substrate is partially consumed to be bonded to the added inorganic silica and loses a bonding chance of the substrate to the water repellent coating composition. On the other hand, as shown in Examples 21 to 26, when a resin modifier which has at least two kinds of reactive radical, i.e., reactive radical chemically bonding to an inorganic material such as methoxy radical, ethoxy radical, silanol radical and the like and reactive radical chemically bonding to an organic material such as vinyl radical, amino radical and the like, is added to the molecules of silicone resin, the intimate adhering property of the silicone resin is improved in the same degree as that of the silicone resin not added with the silicon dioxide powder. In particular, a resin modifier having an amine functional group in the molecules of Examples 21 to 24 has a great effect.

This is considered to be caused by that since the resin modifier, which has the methoxy radical and the like as the functional group chemically bonding to the inorganic material and the amino radical and the like as the functional group chemically bonding to the organic material, is added to the molecules of Examples 21 to 26, the silicone resin is strongly coupled with the inorganic finely divided particles, so that the strength of the coated film itself is increased and the chance for the substrate to be coupled with the water repellent coating composition is increased.

As described above, a water repellent coating composition which is excellent in water repellency and can be strongly coupled with a plate-shaped fin can be provided by adding the inorganic finely divided particles and resin modifier to the silicone resin. Since a heat exchanger excellent in water repellency for a long time can be provided by applying this composition to plate-shaped fins, the fins have an effective capability to cause waterdrops condensed thereon to fall down therefrom even if the fins have a narrow spacing of about 2 mm. As a result, the occurrence of the clogging between the plate-shaped fins caused by the frosting of the heat exchanger of a heat pump type air conditioner is delayed and thus the reduction of the cooling capacity and heating capacity of the heat pump is prevented and intervals at which the heat exchanger of an outside-room unit is defrosted is prolonged, whereby comfortableness can be increased.

As shown in Table 4 as further examples, Examples 31 to 34 and Comparative Examples 31 to 33 were obtained in such a manner that a coating composition was dip coated to a plate-shaped fin 2 composed of an aluminium plate having a thickness of 0.5 mm and dried and hardened for 60 minutes in a hot air drying furnace at 100°C after the coating composition had been prepared by adding various kinds of inorganic finely divided particles to a silicone resin coating agent which exhibited a contact angle with water of 90° or more after it had been coated and dried in a predetermined amount to the solid contents of the coating agent so that the coating agent formed predetermined irregular portions after it had been coated, dried and hardened and then stirring and dispersing the thus obtained coating agent at the normal temperature. Further, Comparative Example 34 was obtained in such a manner that an acrylic resin type coating agent having a contact angle with water below 90° similarly to the above was dip coated to a plate-shaped fin 2 having a thickness of 0.5 mm and dried and hardened for 30 minutes in the hot air drying furnace at 100°C in the same way. The coated film was evaluated based on a water repellent effect and durability of the water repellent effect. The water repellency was evaluated by measuring an contact angle with water. Note, as shown in Figure 2, the contact angle with water is represented by the angle θ between a waterdrop 5 formed on the coated film 4 on the surface of the plate-shaped fin 2 and the surface of the coated film 4, and it can be said that the greater the contact angle θ, the greater the water repellency. The durability of the water repellent effect was evaluated based on the degree of deterioration of the contact angle with water of the surface of a coated film after a condensation-dry cycle had been repeated 30 times. Table 4 shows the effect of these evaluations.

Table 4

| | | Base Resin Compound | Irregular Shape | | Contact Angle with Waterdrop | Water Repellency Durability |
|---|---|---|---|---|---|---|
| | | | H (μm) | D/0.5H | | |
| Examples | 31 | Silicone Contact Angle with Waterdrop 95° | 0.2 | 0.5 | 155° | ○ |
| | 32 | | | 0.8 | 160° | ○ |
| | 33 | | 0.5 | 0.5 | 155° | ○ |
| | 34 | | | 0.8 | 160° | ○ |
| Comparative Examples | 31 | | 0.1 | 0.3 | 130° | – |
| | 32 | | | 0.5 | 150° | × |
| | 33 | | | 0.8 | 160° | × |
| | 34 | Acrylic Type 70° | 0.5 | 0.8 | 55° | – |

H: Spacing between projected peaks
D: Depth of irregular portions
○: little deterioration of the water repellency durability
×: big deterioration of the water repellency durability

As apparent from the Table, the contact angle with water of Examples 31 to 34 is greatly improved as compared with that of Comparative Example 31 the irregular portions of which are D/0.5H < 0.5 and that of Comparative Example 34 coated with an acrylic paint having a contact angle with water below 90° and added with finely divided particles. More specifically, it is exhibited that the water repellency of the Examples is greatly improved. This is considered to be caused by that when the fine particles are added to the water repellent resin, fine irregular portions are formed on the surface of the water repellent resin in addition to that the water repellency is provided on the surface of the resin by the property of the water repellent resin itself. Therefore, it is considered that the area of the resin with which a waterdrop comes into contact is reduced and thus the adhering force of the waterdrop to the surface of the resin is greatly reduced to thereby increase the water repellency.

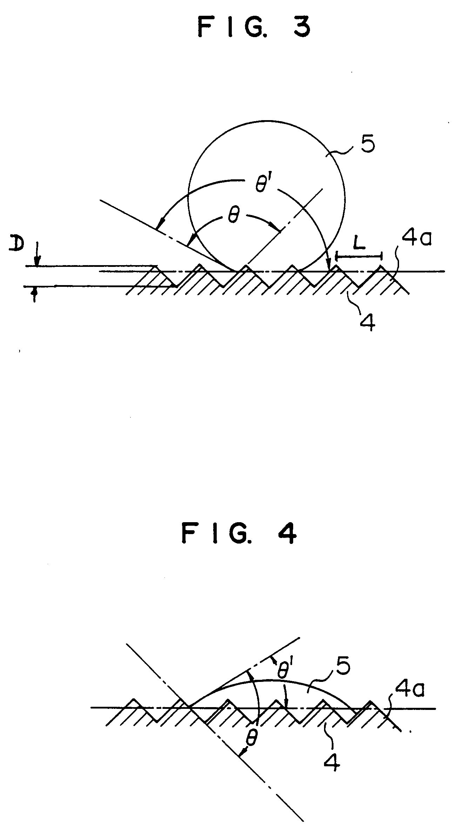

This phenomenon will be further described with reference to a schematic diagram of a waterdrop on a surface having fine irregular portions. Figure 3 is a schematic diagram of a waterdrop on a surface having a contact angle with a waterdrop of 90° or more and irregular portions defined thereon, and Figure 4 is a schematic diagram of a waterdrop on a surface having a contact angle with a water-drop below 90° and irregular portions defined thereon, wherein 4a designates the surface of the coated film 4 and 5 designates the waterdrop. Note that the contact angle with a waterdrop of the surface of a specimen itself is represented by $\theta$ and referred to as a real contact angle. Further, the contact angle of a horizontal surface with a waterdrop is represented by $\theta'$ and referred to as an apparent contact angle. As apparent from Figures 3 and 4, when irregular portions are formed on a surface having a contact angle with a waterdrop of 90° or more, the apparent contact angle with the waterdrop $\theta'$ on the surface is greatly increased as compared with the real contact angle $\theta$ thereof. More specifically, the area where the waterdrop comes into contact with the surface is greatly reduced and thus water repellency is improved. Conversely, when irregular portions are formed on a surface having a contact angle with a waterdrop below 90°, the apparent contact angle with the waterdrop $\theta'$ on the surface is greatly reduced as compared with the real contact angle $\theta$. More specifically, the area where the waterdrop comes into contact with the waterdrop is greatly increased and thus a hydrophilic nature is improved.

Further, it is found that Examples 31 to 34 are excellent in the durability of a water repellent effect as compared with that of Comparative Examples 31 to 33 in which the spacings between irregular portions are less than 0.2 microns. This is considered to be caused by that when water condenses on the surface of a coated film, the water enters the recesses in the fine irregular portions on the surface. Consequently, when the spacings between the irregular portions are small, the waterdrops once entered the irregular portions cannot be evaporated by a usual drying process and thus the water repellency of the irregular portions is deteriorated.

Therefore, when a water repellent coating agent, which is composed of a solution containing a resin compound the surface of the coated film of which has a contact angle with water of 90° or more after the coating agent has been coated, dried and hardened and inorganic or organic finely divided particles dispersed in the above solution and capable of forming fine irregular portions having the spacings L between projections thereof of 0.2 microns or more and the relationship of the spacings L and a depth D of $D/0.5L \geqq 0.5$ on the surface of the coated film after the coated film has been hardened, is coated to a surface, the surface exhibits a very high water repellency as compared with that of a conventional water repellent coating agent and is excellent in the durability of a water repellent effect. As a result, even if fins have a narrow spacing of about 2 mm, the fins maintain for a long time an effective capability to cause waterdrops condensed on the surface thereof to fall down. Consequently, the occurrence of clogging between the fins caused by the frosting of the heat exchanger of a heat pump type air conditioner can be delayed, so that the reduction of the cooling capacity and heating capacity of the heat pump is prevented and intervals at which the heat exchanger of an outside-room unit is to be defrosted is prolonged, whereby comfortableness can be increased.

**Claims**

1. A heat exchanger, comprising:
   a plurality of plate-shaped fins disposed in parallel with a predetermined spacing and allowing air to flow therebetween; and
   heat transfer tubes going across said plate-shaped fins at right angles, wherein a composition composed of a solution containing a silicone resin compound and inorganic finely divided particles is coated to said plate-shaped fins,
   characterized in that said particles have a ratio of 10 to 40 wt% to the solids content in said solution, an area/weight ratio of $50 m^2/g$ or more and an average particle diameter of 4 microns or less.

2. A heat exchanger, comprising:
   a plurality of plate-shaped fins disposed in parallel with a predetermined spacing and allowing air to flow therebetween; and

heat transfer tubes going across said plate-shaped fins at right angles; and further

a coating composed of a solution containing a resin compound and inorganic or organic finely divided particles dispersed in said solution,

characterized in that the surface of the coating has a contact angle with water of 90° or more after it has been coated, dried and hardened and in that said particles are capable of forming fine irregular portions having spacings L between projections thereof of 0.2 microns or more and the relationship of the spacings L and a depth D of $D/0.5L \geqq 0.5$ on the surface of said coating after it has been hardened.

3. A heat exchanger according to claim 1, wherein the surface of said inorganic finely divided particles is subjected to a hydrophobic treatment.

4. A heat exchanger according to claim 1, wherein the surface of said plate-shaped fins is subjected to a chemical film treatment, such as boehmite treatment, phosphoric acid alcohol treatment or chromic salt film treatment.

5. A heat exchanger according to claim 1, wherein said composition is filled with a resin modifier having at least two kinds of functional groups for chemically bonding to organic or inorganic materials.

**Patentansprüche**

1. Warmetauscher, der aufweist:
eine Vielzahl plattenförmiger Rippen, die mit einem vorbestimmten parallelen Abstand angeordnet sind und Luftströmung dazwischen erlauben; und
Wärmeübertragungsröhren, die im rechten Winkel quer zu den plattenförmigen Rippen verlaufen, wobei eine aus einer eine Silikonharzverbindung enthaltenden Lösung und feinverteilten anorganischen Partikeln zusammengesetzte Zusammensetzung auf die plattenförmigen Rippen aufgebracht ist,
dadurch gekennzeichnet, daß die Partikel einen Anteil von 10 bis 40 Gew.-% an dem Feststoffgehalt der Lösung, ein Flächen/Gewichts-Verhältnis von 50 m²/g oder mehr und einen durchschnittlichen Partikeldurchmesser von 4 Mikrometer oder weniger haben.

2. Wärmetauscher, der aufweist:
eine Vielzahl plattenförmiger Rippen, die mit einem vorbestimmten Abstand parallel angeordnet sind und Luftrömung dazwischen erlauben: und
Wärmeübertragungsröhren, die im rechten Winkel quer zu den plattenförmigen Rippen verlaufen; und ferner
eine aus einer eine Harzverbindung enthaltenden Lösung und in der Lösung dispergierten feinverteilten anorganischen oder organischen Partikeln zusammengesetzte Beschichtung,
dadurch gekennzeichnet, daß die Oberfläche der Beschichtung einen Benetzungswinkel mit Wasser von 90° oder mehr hat, nachdem sie aufgebracht, getrocknet und gehärtet worden ist, und daß die Partikel feine unregelmäßige Abschnitte bilden kön-nen, die zwischen Vorsprüngen davon Abstände L von 0,2 Mikrometer oder mehr und ein Verhältnis $D/0,5L \geqq 0,5$ der Abstände L und einer Tiefe D auf der Oberfläche der Beschichtung nach deren Härten haben.

3. Wärmetauscher nach Anspruch 1, bei dem die Oberfläche der feinverteilten anorganischen Partikel einer hydrophoben Behandlung unterzogen wird.

4. Wärmetauscher nach Anspruch 1, bei dem die Oberfläche der plattenförmigen Rippen einer chemischen Film-Behandlung unterzogen wird, wie etwa einer Boehmit-Behandlung, einer Phosphorsäure-Alkohol-Behandlung oder einer Chrom-Salz-Film-Behandlung.

5. Wärmetauscher nach Anspruch 1, bei dem die Zusammensetzung mit einem Harzmodifizierer gefüllt ist, der mindestens zwei Arten funktioneller Gruppen zum chemischen Binden an organische oder anorganische Materialien hat.

**Revendications**

1. Echangeur de chaleur, comprenant

une multiplicité d'ailettes en forme de plaque, disposées parallèlement avec un espacement prédéterminé et permettant le passage d'air entre elles, et

des tubes de transfert de chaleur qui passent à angle droit à travers lesdites ailettes en forme de plaque,

lesdites ailettes en forme de plaque étant revêtues d'une composition constituée par une solution contenant une résine de silicone et des particules inorganiques finement divisées,

caractérisé en ce que lesdites particules sont dans un rapport de 10 à 40% en poids à la teneur en matières solides de ladite solution, ont un rapport surface/poids de 50 m²/g ou plus et ont un diamètre moyen de particules de 4 $\mu$m ou moins.

2. Echangeur de chaleur, comprenant

une multiplicité d'ailettes en forme de plaque, disposées parallèlement avec un espacement prédéterminé et permettant le passage d'air entre elles, et

des tubes de transfert de chaleur qui passent à angle droit à travers lesdites ailettes en forme de plaque,

ainsi qu'un revêtement composé d'une solution contenant un composé résineux et des particules inorganiques ou organiques finement divisées, dispersées dans ladite solution,

caractérisé en ce que la surface du revêtement a un angle de contact avec l'eau de 90° ou plus après que le revêtement a été appliqué, séché et durci, et en ce que lesdites particules sont capables de former de fins éléments irréguliers présentant, entre leurs sommets, des espacements L de 0,2 $\mu$m ou plus, la relation entre les espacements L et la profondeur D étant $D/0,5L \geqq 0,5$ sur la surface dudit revêtement après qu'il a été durci.

3. Echangeur de chaleur selon la revendication 1, dans lequel la surface desdites particules inorganiques finement divisées est soumise à un traitement hydrophobe.

4. Echangeur de chaleur selon la revendication 1, dans lequel la surface desdites ailettes en forme de plaque est soumise à un traitement par film chimique, tel qu'un traitement par la boehmite, un traitement par acide phosphorique/alcool ou un traitement par film d'un sel chromique.

5. Echangeur de chaleur selon la revendication 1, dans lequel ladite composition est additionnée d'un modificateur de résine renfermant au moins deux types de groupements fonctionnels pour sa liaison chimique aux matières organiques ou inorganiques.

# F I G. I

# F I G. 2

# F I G. 3

# F I G. 4